# EUROPÄISCHE PATENTANMELDUNG

(11) **EP 2 067 641 A2**
(43) Veröffentlichungstag der Anmeldung: **10.06.2009**
(21) Anmeldenummer: 08018715.6
(22) Anmeldetag: 25.10.2008
(51) Int. Cl.: B60J 1/20, B60R 21/08

(54) **Kraftfahrzeug mit Sonnenschutzrollo**

(30) Priorität: 08.12.2007 DE 102007059209
(71) Anmelder: Dr.Ing. H.C. F. Porsche Aktiengesellschaft, 70435 Stuttgart (DE)
(72) Erfinder: Hofmann, Peter, 75242 Neuhausen (DE)

(57) **Zusammenfassung**

Die vorliegende Erfindung betrifft ein Kraftfahrzeug (1) mit einer hinter einer Rückenlehne (2) eines Kraftfahrzeugsitzes angeordneten Schutzeinrichtung (6), die ein flexibles und zwischen einer ausgefahrenen Gebrauchsstellung und einer eingefahrenen Nichtgebrauchsstellung verstellbares Flächengebilde (7), insbesondere ein Sonnenschutzrollo (7) aufweist. Erfindungswesentlich ist dabei, dass das Kraftfahrzeug (1) coupéartig ausgebildet ist und eine elektrische Antriebseinrichtung vorgesehen ist, die das als Sonnenschutzrollo (7) ausgebildete Flächengebilde (7) zwischen seiner Gebrauchs- und seiner Nichtgebrauchsstellung im wesentlichen vertikal verstellt, wobei das Sonnenschutzrollo (7) in seiner Gebrauchsstellung im wesentlichen vertikal freistehend angeordnet ist.

## Beschreibung

Die vorliegende Erfindung betrifft ein Kraftfahrzeug mit einer hinter einer Rückenlehne eines Kraftfahrzeugsitzes angeordneten Schutzeinrichtung gemäß dem Oberbegriff des Anspruchs 1.

Aus der DE 10 2004 055 359 A1 ist eine Schutzeinrichtung für Kraftfahrzeuge bekannt, die ein flexibles und zwischen einer Gebrauchsstellung und einer Nichtgebrauchsstellung verstellbares Flächengebilde, insbesondere ein Sonnenschutzrollo aufweist. Zum Verstellen des flexiblen Flächengebildes zwischen dessen Gebrauchs- und dessen Nichtgebrauchsstellung dient ein manuell bedienbares Betätigungsglied, welches mit einem Übertragungsmittel eine mechanische Übertragungskette bildet, so dass eine Bewegung des Betätigungsgliedes in eine Ein- oder eine Ausfahrbewegung des flexiblen Flächengebildes umsetzbar ist. Vorzugsweise ist die Schutzeinrichtung dabei zur Abtrennung eines Laderaums von einem Fahrgastraum in einem Kraftfahrzeug eingesetzt. Das Ausfahren erfolgt dabei stets manuell mechanisch, wobei jedoch eine elektrische Unterstützung der Ein- und Ausfahrbewegung denkbar ist.

Aus der EP 0 240 747 B1 ist ein ausfahrbares Fensterrollo bekannt, welches mittels einer komplizierten Hebelkinematik zwischen einer ausgefahrenen Gebrauchsstellung und einer eingefahren Nichtgebrauchsstellung verstellbar ist.

Die vorliegende Erfindung beschäftigt sich mit dem Problem, für ein Kraftfahrzeug der gattungsgemäßen Art eine verbesserte Ausführungsform anzugeben, welche insbesondere eine störende Sonneneinstrahlung durch eine Heckscheibe in einem Fahrgastraum zuverlässig verhindert und bei welcher eine die Sonneneinstrahlung zurückhaltende Schutzeinrichtung konstruktiv günstig angeordnet ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, bei einem coupéartig ausgebildeten Kraftfahrzeug, welches üblicherweise eine stark geneigte Heckscheibe aufweist, eine entsprechende Schutzeinrichtung zum Schutz vor durch die Heckscheibe einfallender Sonnenstrahlung, hinter einer Rückenlehne eines Kraftfahrzeugsitzes anzuordnen und mittels einer elektrischen Antriebseinrichtung auszustatten, welche ein als Sonnenschutzrollo ausgebildetes flexibles Flächengebilde zwischen seiner ausgefahren Gebrauchsstellung und seiner eingefahrenen Nichtgebrauchsstellung im wesentlichen vertikal verstellt. Im Unterschied zu bisherigen, aus dem Stand der Technik bekannten Sonnenschutzrollos, steht das erfindungsgemäße Sonnenschutzrollo zudem in seiner Gebrauchsstellung vertikal frei, das heißt es ist mit einem oberen Endbereich nicht mit einer Fahrzeugkarosserie, insbesondere nicht mit einem Fahrzeughimmel verbunden. Im Unterschied zu den aus dem Stand der Technik bekannten Sonnenschutzrollos, weist die erfindungsgemäße Schutzeinrichtung einen relativ geringen Ausfahrweg auf, welcher deutlich kürzer ist, als dies bei einem direkt unter einer Heckscheibe angeordneten Sonnenschutzrollo der Fall ist, welches dann parallel zur Heckscheibe entlang dieser verstellt werden müsste. Die Reduzierung der Ausfahrhöhe reduziert gleichzeitig auch das Gewicht der Schutzeinrichtung, was insbesondere im Sportwagenbau von großem Vorteil ist. Darüber hinaus bietet die Anordnung der erfindungsgemäßen Schutzeinrichtung direkt hinter den Rückenlehnen der Kraftfahrzeugsitze den Vorteil, dass die Schutzeinrichtung nicht an einem Heckdeckel befestigt ist und dadurch kein zusätzliches, beispielsweise von Gasfedern zu stemmendes Gewicht beim Öffnen des Heckdeckels darstellt. Gleichzeitig wird die Schutzeinrichtung auch nicht mit hohen Beschleunigungskräften beaufschlagt, wie dies der Fall wäre, sofern die Schutzeinrichtung fest am Heckdeckel angeordnet wäre. Die Anordnung der Schutzreinrichtung hinter den Rückenlehnen der Kraftfahrzeugsitze, insbesondere hinter den Rückenlehnen der Rücksitze, ermöglicht es auch, die Schutzeinrichtung lösbar im Kraftfahrzeug zu befestigen, das heißt bei Bedarf aus dem Kraftfahrzeug entnehmen zu können. Bei einer Anordnung am Heckdeckel wäre eine demontierbare Anordnung nicht ohne weiteres möglich.

Zweckmäßig ist die Schutzeinrichtung in einem Gehäuse angeordnet, in welchem zugleich eine Laderaumabdeckung mit einem ausziehbaren Rollo untergebracht ist. Dies bietet den Vorteil, dass die Schutzeinrichtung zusammen mit der Laderaumabdeckung in einer Art Kassette angeordnet ist und dadurch äußerst kompakt gestaltet werden kann. Auch bei einem Entfernen der Schutzeinrichtung ist dies vorteilhaft, da mit dem Entfernen des Gehäuses zugleich die Schutzeinrichtung und die Laderaumabdeckung entfernt und dadurch der Laderaum vergrößert werden können.

Bei einer vorteilhaften Weiterbildung der erfindungsgemäßen Lösung, erstreckt sich die Schutzeinrichtung in Fahrzeugquerrichtung und ist mit ihren Längsenden in entsprechenden fahrzeugseitigen Aufnahmen gehalten, die so ausgebildet und angeordnet sind, dass eine Montage der Schutzeinrichtung von einem Fahrgastraum aus möglich ist. Die Schutzeinrichtung ist somit aus dem Kraftfahrzeug entnehmbar, je nach Ausführungsform zusammen mit der oder ohne die Laderaumabdeckung und kann daher zur Vergrößerung eines hinter den Fahrzeugsitzen, insbesondere hinter den Rücksitzen gelegenen Laderaumvolumens einfach aus dem Fahrzeug entnommen werden. Durch die Möglichkeit, die Schutzeinrichtung vom Fahrgastraum her zu montieren, bzw. zu demontieren, wird darüber hinaus eine Montage bzw. Demontage derselben im Vergleich zu einer Montage bzw. Demontage vom Kofferraum aus deutlich erleichtert. Die fahrzeugseitigen Aufnahmen können dabei so ausgestaltet sein, dass sie beim Einführen der Längsenden der Schutzeinrichtung diese, beispielsweise mittels Fixierelementen, in den fahrzeugseitigen Aufnahmen sicher halten.

Bei einer weiteren vorteilhaften Ausführungsform der erfindungsgemäßen Lösung weist die Schutzeinrichtung eine Spaltabdeckung auf, welche in Richtung einer Rückenlehne vorgespannt ist und einen Spalt zwischen der Rückenlehne und der Schutzeinrichtung abdeckt. Bei einer Anordnung der Schutzeinrichtung direkt hinter den Fahrzeugsitzen, könnte auf eine Spaltabdeckung üblicherweise verzichtet werden, während bei Kraftfahrzeugsitzen, insbesondere bei Fondsitzen mit verstellbaren Rückenlehnen, je nach Stellung derselben ein Spalt zwischen der Rückenlehne und der Schutzeinrichtung verbleibt, welcher dann von der erfindungsgemäßen Spaltabdeckung abgedeckt werden kann, so dass ein geschlossenes Erscheinungsbild erzeugt wird. Durch die Federvorspannung der Spaltabdeckung in Richtung der Rückenlehnen kann darüber hinaus der Spalt unabhängig von der Stellung der Rückenlehne zuverlässig abgedeckt werden. Neben dem geschlossenen Erscheinungsbild ermöglicht die Spaltabdeckung auch einen Sichtschutz auf unter der Schutzeinrichtung verstautes Ladegut sowie einem Schutz desselben vor Verschmutzung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

### Dabei zeigen, jeweils schematisch

- Fig. 1: ein Längsschnitt durch einen hinteren Teil eines Kraftfahrzeuges mit einer erfindungsgemäßen Schutzeinrichtung,
- Fig. 2: eine Ansicht auf einen hinteren Karosseriebereich des Kraftfahrzeuges mit der eingebauten Schutzeinrichtung,
- Fig. 3: eine Detaildarstellung der Schutzeinrichtung.

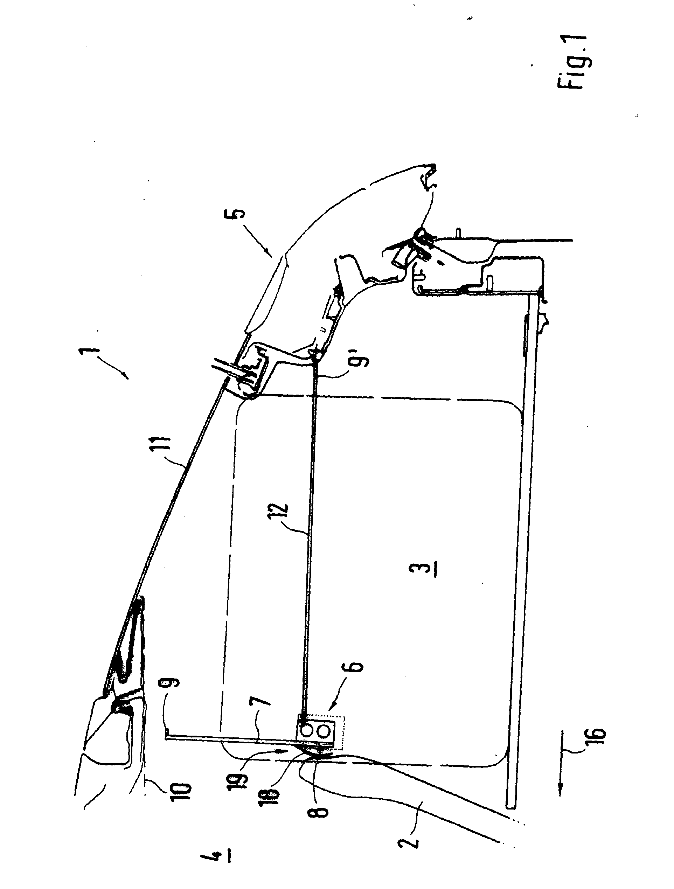

Entsprechend Fig. 1 weist ein lediglich teilweise dargestelltes Kraftfahrzeug 1 einen hinter einer Rückenlehne 2 eines im übrigen nicht dargestellten Kraftfahrzeugsitzes gelegenen Laderaum 3 auf. Die Rückenlehne 2 kann dabei zu einem Fondsitz des Kraftfahrzeuges 1 gehören. Der Laderaum 3 ist vorzugsweise sowohl von einem Fahrgastraum 4 aus zugänglich, als auch durch ein Öffnen einer Heckklappe bzw. eines Heckdeckels 5. Unmittelbar hinter der Rückenlehne 2 ist eine Schutzeinrichtung 6 angeordnet, die ein flexibles und zwischen einer ausgefahrenen Gebrauchsstellung (vgl. Fig. 1 bis 3) und einer eingefahrenen Nichtgebrauchsstellung verstellbares Flächengebilde 7 aufweist. Das Flächengebilde 7 ist gemäß den Fig. 1 bis 3 in seinem ausgefahrenen Gebrauchszustand gezeigt, wogegen es in seinem Nichtgebrauchszustand aufgewickelt in einem Gehäuse 8 der Schutzeinrichtung 6 untergebracht ist.

Das Flächengebilde 7 ist erfindungsgemäß als Sonnenschutzrollo ausgebildet und mittels einer nicht dargestellten elektrischen Antriebseinrichtung zwischen seiner Gebrauchs- und Nichtgebrauchsstellung verstellbar. Wie der Fig. 1 dabei zu entnehmen ist, wird das Flächengebilde 7 zwischen seiner Gebrauchsstellung und seiner Nichtgebrauchsstellung im wesentlichen in vertikaler Richtung verstellt und ist in seiner Gebrauchsstellung im wesentlichen vertikal freistehend angeordnet. Freistehend angeordnet bedeutet in diesem Fall, dass das flexible Flächengebilde 7 mit einem oberen Endbereich 9 nicht mit dem Kraftfahrzeug 1, insbesondere nicht mit einem Fahrzeughimmel 10 des Kraftfahrzeuges 1 verbunden ist.

Das im wesentlichen vertikal verstellbare Flächengebilde 7 der Schutzeinrichtung 6 bietet dabei den großen Vorteil, dass die Schutzeinrichtung 6 die durch eine Heckscheibe 11 einfallende Sonnenstrahlung zuverlässig vom Fahrgastraum 4 fern hält. Vor allem weist die erfindungsgemäße Schutzeinrichtung 6 eine deutlich geringere Ausfahrhöhe zur Abdeckung der Heckscheibe 11 auf, als dies bei einer unmittelbar unter der Heckscheibe 11 angeordneten Schutzeinrichtung der Fall wäre, bei welcher das Sonnenschutzrollo parallel zur Heckscheibe 11 und entlang dieser ausgefahren werden müsste. Die geringe Ausfahrhöhe bietet aufgrund der geringeren Stofffläche einen Gewichtsvorteil, der insbesondere im Sportwagenbau von Bedeutung ist.

Im Vergleich zu unmittelbar unter der Heckscheibe 11, das heißt direkt am Heckdeckel 5 angeordneten Schutzeinrichtungen, bleibt bei der erfindungsgemäß angeordneten Schutzeinrichtung 6 der Heckdeckel 5 vom Gewicht der Schutzeinrichtung 6 unbelastet, so dass die eine Öffnungsbewegung des Heckdeckels 5 unterstützenden Gasfedern nicht auch noch das Gewicht der Schutzeinrichtung 6 stemmen und dadurch stärker ausgelegt sein müssten. Gleichzeitig ist die erfindungsgemäß angeordnete Schutzeinrichtung 6 auch nicht den hohen Beschleunigungskräften ausgesetzt, wie dies der Fall wäre, sofern die Schutzeinrichtung 6 unmittelbar unter der Heckscheibe 11 am Heckdeckel 5 angeordnet wäre. Die hohen Beschleunigungskräfte würden dabei im letzten Fall insbesondere beim Zuschlagen des Heckdeckels 5 auf die Schutzeinrichtung 6 einwirken, wodurch diese besonders fest mit dem Heckdeckel 5 verbunden sein müsste.
Wie der Fig. 1 weiter zu entnehmen ist, ist in dem Gehäuse 8 der Schutzeinrichtung 6 zugleich eine Laderaumabdeckung mit einem ausziehbaren und in ausgezogenem Zustand den Laderaum 3 abdeckenden Rollo 12 angeordnet. Das Rollo 12 kann dabei manuell oder ebenfalls mittels eines nicht dargestellten elektrischen Antriebes zwischen einer in das Gehäuse 8 eingefahrenen Nichtgebrauchsstellung und einer gemäß der Fig. 1 dargestellten Gebrauchsstellung verstellt werden. Um den Laderaum 3 trotz sich in seinem Gebrauchszustand befindlichem Rollo 12 zugänglich machen zu können, ist ein Endbereich 9' des Rollos 12 vorzugsweise an der Heckklappe 5 des coupéartigen Kraftfahrzeugs 1 befestigt, so dass beim Öffnen des Heckdeckels 5 der Endbereich 9' des Rollos 12 mit hochgehoben wird und automatisch einen Zugang zum Laderaum 3 freigibt.

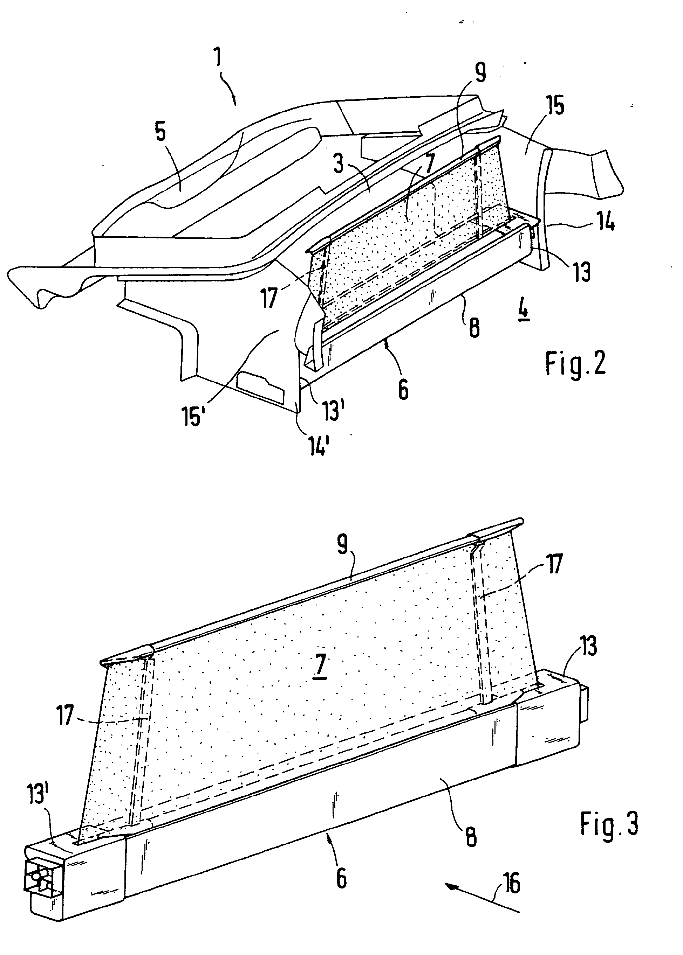

Wie in den Fig. 2 und 3 gezeigt ist, erstreckt sich die Schutzeinrichtung 6 im wesentlichen in Fahrzeugquerrichtung und ist mit ihren. Längsenden 13 und 13' in entsprechenden, fahrzeugseitigen Aufnahmen 14 und 14' gehalten. Die fahrzeugseitigen Aufnahmen 14 und 14' sind dabei vorzugsweise so ausgebildet bzw. angeordnet, dass eine Montage der Schutzeinrichtung 6 vom Fahrgastraum 4 aus möglich ist, was die Montage bzw. Demontage der Schutzeinrichtung 6 erheblich erleichtert.

Wie insbesondere der Fig. 2 zu entnehmen ist, sind die fahrzeugseitigen Aufnahmen 14 und 14' im Bereich einer C-Säule 15 und 15' des Kraftfahrzeuges 1 angeordnet und damit direkt hinter den nicht gezeigten Rückenlehnen 2 der Fondsitze. Da die erfindungsgemäße Schutzeinrichtung 6 zum Verstellen des Flächengebildes 7 zwischen dessen Gebrauchs- und Nichtgebrauchsstellung über oben erwähnte elektrische Antriebseinrichtung verfügt, welche beispielsweise in einem der Längsendbereiche 13, 13' angeordnet ist, ist im Bereich zumindest einer der beiden fahrzeugseitigen Aufnahmen 14, 14' eine ebenfalls nicht dargestellte elektrische Kontakteinrichtung vorgesehen, über welche die elektrische Antriebseinrichtung mit einem elektrischen Bordnetz des Kraftfahrzeuges 1 verbunden werden kann. Darüber hinaus können an zumindest einem Längsende 13, 13' der Schutzeinrichtung 6 ebenfalls nicht gezeigte und vorzugsweise mittels Federn vorgespannte Rastelemente vorgesehen sein, welche mit entsprechenden Gegenrastelementen bzw. Rastöffnungen in den fahrzeugseitigen Aufnahmen 14 und 14' zusammenwirken und dadurch die Längsenden 13, 13' in den jeweils zugehörigen fahrzeugseitigen Aufnahmen 14, 14' zuverlässig halten.

Zum Aufspannen des Flächengebildes 7, welches einerseits für Sonneneinstrahlung undurchlässig, andererseits aber blickdurchlässig ausgebildet ist, ist ein in Fahrtrichtung 16 hinter dem Flächengebilde 7, das heißt hinter dem Sonnenschutzrollo liegendes, verstellbares Spanngestänge 17 vorgesehen, welches verstellbar ausgebildet ist und welches das flexible Flächengebilde 7 insbesondere in seinem Gebrauchszustand in gespanntem Zustand hält. Das Spanngestänge 17 ist dabei so ausgebildet, dass es sich bei vollständig in seinem Nichtgebrauchszustand befindlichen Flächengebilde 7 parallel zur Längserstreckung der Schutzeinrichtung 6 erstreckt und innerhalb des Gehäuses 8 der Schutzeinrichtung 6 untergebracht ist. Bei der Ausfahrbewegung richtet sich das Spanngestänge 17 langsam auf und spannt dadurch das Flächengebilde 7, welches zusätzlich beispielsweise über eine federvorgespannte Wickelwelle im Gehäuse 8 gespannt sein kann.

Zurückkommend auf die Fig. 1 muss noch erwähnt werden, dass an der Schutzeinrichtung 6 eine Spaltabdeckung 18 vorgesehen sein kann, die in Richtung der Rücklehne 2 vorgespannt ist und dadurch einen Spalt 19 zwischen der Rückenlehne 2 und der Schutzeinrichtung 6 abzudecken vermag. Ein derartiger Spalt 19 beeinträchtigt insbesondere bei verstellbaren Rückenlehnen 2 das Erscheinungsbild und soll deshalb von der Spaltabdeckung 18 in allen erdenklichen Stellung der Rückenlehne 2 abgedeckt werden. In den Fig. 2 und 3 ist die Spaltabdeckung 18 der Einfachheit halber nicht dargestellt.

Durch die erfindungsgemäße Anordnung der Schutzeinrichtung 6 direkt hinter der Rückenlehne 2 der Fondsitze, kann diese im Unterschied zu einer Montage am Heckdeckel 5 abnehmbar ausgestaltet sein und einfach vom Fahrgastraum 4 aus montiert bzw. demontiert werden, letzteres insbesondere zu einer Vergrößerung des Laderaums 3. Durch die elektrische Antriebseinrichtung ist zudem ein komfortables Verstellen des Sonnenschutzrollos, das heißt des Flächengebildes 7 von dessen Gebrauchszustand in dessen Nichtgebrauchszustand oder umgekehrt möglich.

## Patentansprüche

1. Kraftfahrzeug (1) mit einer hinter einer Rückenlehne (2) eines Kraftfahrzeugsitzes angeordneten Schutzeinrichtung (6), die ein flexibles und zwischen einer ausgefahrenen Gebrauchsstellung und einer eingefahrenen Nichtgebrauchsstellung verstellbares Flächengebilde (7), insbesondere ein Sonnenschutzrollo (7) aufweist, **dadurch gekennzeichnet, dass** das Kraftfahrzeug (1) coupéartig ausgebildet ist und eine elektrische Antriebseinrichtung vorgesehen ist, die das als Sonnenschutzrollo (7) ausgebildete Flächengebilde (7) zwischen seiner Gebrauchs- und seiner Nichtgebrauchsstellung im wesentlichen vertikal verstellt, wobei das Sonnenschutzrollo (7) in seiner Gebrauchsstellung im wesentlichen vertikal freistehend angeordnet ist.

2. Kraftfahrzeug nach Anspruch 1, **dadurch gekennzeichnet, dass** die Schutzeinrichtung (6) in einem Gehäuse (8) angeordnet ist, in welchem zugleich eine Laderaumabdeckung mit einem ausziehbaren Rollo (12) angeordnet ist.

3. Kraftfahrzeug nach Anspruch 2, **dadurch gekennzeichnet, dass** das ausziehbare Rollo (12) der Laderaumabdeckung an einem Heckdeckel (5) des coupéartigen Kraftfahrzeugs (1) befestigbar ist.

4. Kraftfahrzeug nach einem der Ansprüche 1 bis 3, **dadurch gekennzeichnet, dass** die Schutzeinrichtung (6) sich in Fahrzeugquerrichtung erstreckt und mit ihren Längsenden (13, 13') in entsprechenden fahrzeugseitigen Aufnahmen (14, 14') gehalten ist.

5. Kraftfahrzeug nach Anspruch 4, **dadurch gekennzeichnet, dass** die fahrzeugseitigen Aufnahmen (14, 14') derart ausgebildet und angeordnet sind, dass eine Montage der Schutzeinrichtung (6) von einem Fahrgastraum (4) aus möglich ist.

6. Kraftfahrzeug nach Anspruch 4 oder 5, **dadurch gekennzeichnet, dass** die fahrzeugseitigen Aufnahmen (14, 14') im Bereich einer C-Säule (15, 15') des coupéartigen Kraftfahrzeuges (1) angeordnet sind.

7. Kraftfahrzeug nach einem der Ansprüche 4 bis 6, **dadurch gekennzeichnet, dass** im Bereich zumindest einer fahrzeugseitigen Aufnahme (14, 14') eine elektrische Kontakteinrichtung vorgesehen ist, über welche die elektrische Antriebseinrichtung mit einem elektrischen Bordnetz des Kraftfahrzeuges (1) verbunden ist.

8. Kraftfahrzeug nach einem der Ansprüche 4 bis 7, **dadurch gekennzeichnet, dass** an zumindest einem Längsende (13, 13') der Schutzeinrichtung (6) Rastelemente vorgesehen sind, welche mit entsprechenden Gegenrastelementen oder Rastöffnungen in den fahrzeugseitigen Aufnahmen (14, 14') zusammenwirken.

9. Kraftfahrzeug nach einem der Ansprüche 1 bis 8, **dadurch gekennzeichnet, dass** die Schutzeinrichtung (6) eine Spaltabdeckung (18) aufweist, welche in Richtung einer Rückenlehne (2) vorgespannt ist und einen Spalt (19) zwischen der Rückenlehne (2) und der Schutzeinrichtung (6) abdeckt.

10. Kraftfahrzeug nach einem der Ansprüche 1 bis 9, **dadurch gekennzeichnet, dass** ein in Fahrtrichtung (16) hinter dem Sonnenschutzrollo (7) liegendes, verstellbares Spanngestänge (17) vorgesehen ist, welches das flexible Sonnenschutzrollo (7) insbesondere in seinem Gebrauchszustand in gespanntem Zustand hält.
